# EUROPEAN PATENT APPLICATION

(11) **EP 4 007 049 A1**
(43) Date of publication of application: **01.06.2022**
(21) Application number: 20885614.6
(22) Date of filing: 29.10.2020
(51) Int. Cl.: H01M 50/20, H01M 10/653, H01M 10/625

(54) **BATTERY PACK AND DEVICE INCLUDING SAME**

(30) Priority: 08.11.2019 KR 20190142734
(71) Applicant: LG ENERGY SOLUTION, LTD., Seoul 07335 (KR)
(72) Inventor: LEE, Hyunjae, Daejeon 34122 (KR); SEONG, Junyeob, Daejeon 34122 (KR); CHOI, Jonghwa, Daejeon 34122 (KR)
(74) Representative: Plasseraud IP
(86) International application number: PCT/KR2020/095129
(87) International publication number: WO 2021/091364

(57) **Abstract**

A battery pack according to an embodiment of the present invention includes: a battery module frame accommodating a battery cell laminated body; and a battery pack frame to which the battery module frame is mounted, wherein the battery module frame includes a protruded part having a shape protruded from the lower part of the battery module frame toward the battery pack frame and combined with the battery pack frame, and one side of the battery pack frame facing the battery module frame is formed flat.

## Description

### [Technical Field]

### CROSS-REFERENCE TO RELATED APPLICATION

This application claims priority to and the benefit of Korean Patent Application No. 10-2019-0142734 filed in the Korean Intellectual Property Office on November 08, 2019, the entire contents of which are incorporated herein by reference.

The present invention relates to a battery pack and a device including the same. More particularly, the present invention relates to a battery pack including a pack frame with a simplified shape and a device including the same.

### [Background Art]

Rechargeable batteries are receiving a lot of attention as an energy source in various product groups such as mobile devices and electric vehicles. These rechargeable batteries are a powerful energy resource that may replace the use of existing products that use fossil fuels, and are spotlighted as an environmentally-friendly energy source because they do not generate byproducts from energy use.

Recently, as the need for a large-capacity rechargeable battery structure has increased, including a use as an energy storage source for the rechargeable batteries, the demand for a battery pack having a multi-module structure grouping a battery module in which a plurality of rechargeable batteries are assembled in series/in parallel is increasing.

On the other hand, when configuring the battery pack by coupling a plurality of battery cells in series/in parallel, a method of configuring a battery module composed of at least one battery cell and adding other constituent elements by using such a plurality of battery modules to configure the battery pack is common.

The battery module constituting the battery pack includes a battery cell laminated body in which a plurality of battery cells are laminated and a battery module frame accommodating the battery cell laminated body, and is coupled to the battery pack frame.

The conventional battery pack frame is provided with four protruded shapes per module for the coupling at the part on which the battery module frame is mounted, so that the battery module frame is coupled thereto. In this case, when aligning the coupling part of the battery module frame to these protruded shapes, the left and right positions and heights of the protruded shapes had to be aligned, so there is a problem that an assembly tolerance increases. In addition, since a plurality of protrude shapes are formed in the battery pack frame, the weight of the entire battery pack frame increases and the shape becomes complicated.

### [Disclosure]

### [Technical Problem]

The problem to be solved by the present invention is to provide a battery pack that may be assembled more easily by simplifying the shape of the battery pack frame to reduce the weight of the battery pack and to reduce an assemble tolerance.

The objects to be solved in the present invention are not limited to the above-mentioned objects, and other non-mentioned objects can be clearly understood to those skilled in the art from the following description.

### [Technical Solution]

A battery pack according to an embodiment of the present invention includes: a battery module frame accommodating a battery cell laminated body; and a battery pack frame to which the battery module frame is mounted, wherein the battery module frame includes a protruded part having a shape protruded from the lower part of the battery module frame toward the battery pack frame and combined with the battery pack frame, and one side of the battery pack frame facing the battery module frame is formed flat.

The battery pack frame may include a coupling hole in a position corresponding to the protruded part.

The protruded part and the coupling hole may be coupled to each other via a mounting member.

The battery module frame may include an end plate that covers the front and rear surfaces of the battery cell laminated body, and the protruded part may be protruded from the bottom of the end plate.

A through-hole formed through the protruded part at both ends of the end plate may be included, and the mounting member may be inserted through the through-hole and the coupling hole to be jointed.

A thermal conductive resin layer positioned between the battery module frame and the battery pack frame may be further included.

The thickness of the thermal conductive resin layer may be the same as the thickness of the protruded part protruded from the bottom of the battery module frame.

The battery module frame may further include an insulating member attached to the end of the protruded part.

A battery module according to another embodiment of the present invention includes a battery cell laminated body, and a battery module frame accommodating the battery cell laminated body, wherein the battery module frame includes a module frame covering fours surfaces of the battery cell laminated body and including an opening exposing the end of both sides in the length direction of the battery cell laminated body, and an end plate coupled to the opening of both sides of the module frame, wherein the end plate includes a protruded part protruded under the end plate.

The end plate may include a through-hole formed through the protruded part on both sides.

A device according to according to another embodiment of the present invention may include at least one battery pack described above.

### [Advantageous Effects]

The battery pack according to an embodiment of the present invention may reduce the weight of the battery pack by simplifying the shape of the battery pack frame, and may be assembled more easily by reducing an assemble tolerance, and may prevent a waste of the thermally conductive resin provided in the battery pack.

The above effects desired to be achieved in the present invention are not limited to the aforementioned effects, and other effects not described above will be apparent to those skilled in the art from the disclosure of the present invention.

### [Description of the Drawings]

FIG. 1 is a view showing a battery module according to an embodiment of the present invention.
FIG. 2 is an enlarged view of a part A of FIG. 1.
FIG. 3 is a view showing an appearance before a battery pack according to an embodiment of the present invention is assembled.
FIG. 4 is a view showing an appearance after a battery pack according to an embodiment of the present invention is assembled.
FIG. 5 is a side view of a battery pack according to an embodiment of the present invention.
FIG. 6 is a schematic view to explain an effect of a battery pack according to an embodiment of the present invention.
FIG. 7 is a side view of a battery pack according to another embodiment of the present invention.

### [Mode for Invention]

It should be understood that the embodiments described below are illustratively shown to help the understanding of the invention, and the present invention may be implemented with various modifications different from the embodiments described herein. However, when it is determined that a detailed description of a related known function or constituent element in describing the present invention may unnecessarily obscure the gist of the present invention, the detailed description and detailed illustration thereof will be omitted. In addition, the accompanying drawings are not drawn with an actual scale, but dimensions of some constituent elements may be exaggerated in order to help the understanding of the invention.

The terms first and second used in this application may be used to describe various configurations elements, but the constituent elements should not be limited by the terms. The above terms are used only for distinguishing one constituent element from other constituent elements.

In addition, the terms used in the present application are used only to describe specific embodiments, and are not intended to limit the scope. When explaining the singular, unless explicitly described to the contrary, it may be interpreted as having a plural meaning. In the present application, terms such as "comprise", "consisting of" or "consisting" are intended to designate that features, numbers, steps, operations, constituent elements, parts, or combinations thereof described in the specification exist, one or the other. It should be understood that the existence or addition of the above other features, numbers, steps, operations, constituent elements, parts, or combinations thereof is not excluded in advance.

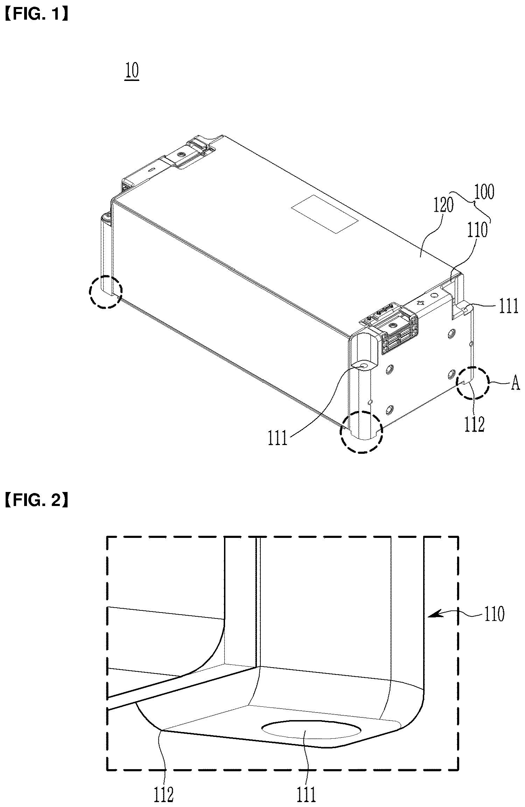

Hereinafter, a battery module and a battery pack according to an embodiment of the present invention will be described with reference to FIG. 1 to FIG. 6.

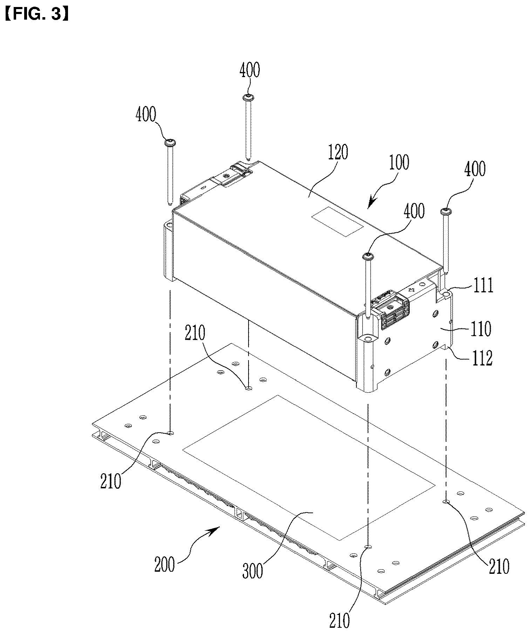

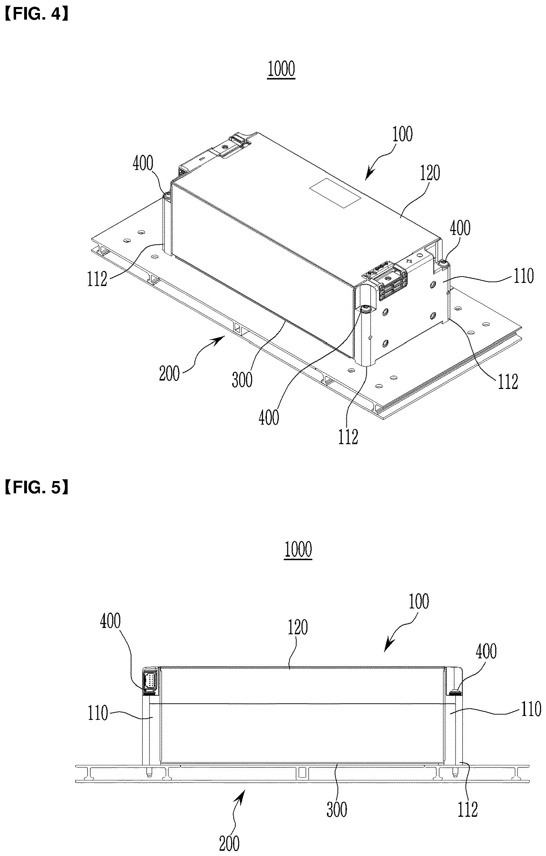

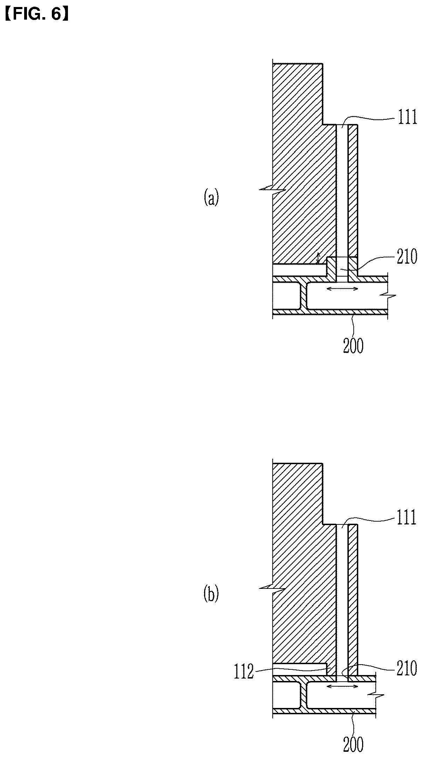

FIG. 1 is a view showing a battery module according to an embodiment of the present invention, FIG. 2 is an enlarged view of a part A of FIG. 1, FIG. 3 is a view showing an appearance before a battery pack according to an embodiment of the present invention that is assembled, FIG. 4 is a view showing an appearance after a battery pack according to an embodiment of the present invention that is assembled, FIG. 5 is a side view of a battery pack according to an embodiment of the present invention, and FIG. 6 is a schematic view to explain an effect of a battery pack according to an embodiment of the present invention.

As shown in FIG. 1, a battery module 10 according to an embodiment of the present invention includes a battery module frame 100 accommodating a battery cell laminated body, and at this time, the battery module frame 100 includes a module frame 120 that covers four surfaces of the battery cell laminated body and includes openings exposing both ends in the length direction of the battery cell laminated body, and an end plate 110 coupled to the openings on both sides of the module frame 120, and the end plate 110 includes a protruded part 112 protruded downward.

The battery cell is a rechargeable battery and may be configured as a pouch-type rechargeable battery. Such a battery cell may be composed of a plurality thereof, and a plurality of battery cells may be stacked to each other so as to be electrically connected to each other to form a battery cell laminated body. Each of these plurality of battery cells may include an electrode assembly, a battery case, and an electrode lead protruded from the electrode assembly.

The battery module frame 100 accommodates a battery cell laminated body formed by stacking a plurality of battery cells, and physically protects the battery cell laminated body. The battery module frame 100 may include an end plate 110 formed to cover the front and rear surfaces of the battery cell laminated body and a module frame 120 formed to cover upper, lower, left, and right surfaces of the battery cell laminated body. The module frame 120 may be in the form of a square tube in which the upper, lower, left, and right surfaces are integrally formed, or may be formed of a U-shaped frame that integrally covers any one of the upper and lower surfaces and the left and right surfaces, and a plate coupled to the open surface of the U-shaped frame.

The end plate 110 may be joined to the module frame 120 through welding, and a bus bar frame formed between the end plate 110 and the battery cell laminated body and the battery cell laminated body may be physically protected.

As shown in FIG. 2, the end plate 110 includes a protruded part 112 protruded downwards at the bottom. This protruded part 112 is a configuration for coupling with the battery pack frame to be described later, and the detailed configuration is described later.

As shown in FIG. 3 to Fig. 5, the battery pack 1000 according to an embodiment of the present invention includes a battery module frame 100 for accommodating a battery cell laminated body, and a battery pack frame 200 on which the battery module frame 100 is mounted, the battery module frame 100 includes a protruded part 112 that has a protruded shape toward the battery pack frame 200 and combines with the battery pack frame 200, and one side of the battery pack frame 200 facing the battery module frame 100 is formed flat.

The battery pack frame 200 is formed to accommodate the battery module frame 100. The battery pack frame 200 may physically protect a plurality of battery cells accommodated in the battery module frame 100, is mounted on various devices that require power, and may supply the power generated from the battery modules formed inside the battery pack frame 300 to the devices.

In addition, between the battery pack frame 200 and the battery module frame 100, a thermal conductive resin layer 300 may be positioned. The thermal conductive resin layer 300 may be made of a thermal conductive resin for heat dissipation, and the heat generated from the battery module 10 may be radiated to the battery pack frame 200 side.

According to an embodiment of the present invention, the battery module frame 100 may be mounted on the upper side of the battery pack frame 200. More specifically, the upper surface of the battery pack frame 200 includes a coupling hole 210 for coupling with the battery module frame 100, and may be coupled to the battery pack frame 200 in such a way that the protruded part 112 of the battery module frame 100 is mounted in the coupling hole 210.

The mounting member 400 may couple the battery pack frame 200 and the battery module frame 100 together. More specifically, through-holes 111 formed through the protruded part 112 are formed at both ends of the end plate 110 formed at the front and rear of the battery module frame 100, a coupling hole 210 for coupling thereto is formed at the top of the battery pack frame 200, and the mounting member 400 integrally penetrates the through-holes 111 formed at both ends of the end plate 110 and the coupling holes 210 formed at the top of the battery pack frame 200, thereby combining the end plate 110 and the battery pack frame 200. The mounting member 400 may be inserted through the coupling hole 210 to the inside of the battery pack frame 200.

The mounting member 400 may be formed as a bolt. However, the mounting member is not limited to the bolt, and it is possible to combine the battery module frame and the battery pack frame by utilizing various embodiments.

According to an embodiment of the present invention, the upper surface of the battery pack frame 200 is formed flat without a protruding shape, and only the coupling hole 210 is formed. By simplifying the configuration of the battery pack frame 200 in this way, the weight of the entire battery pack frame 200 may be reduced. In addition, the combination of the battery pack frame 200 and the battery module frame 100, as described above, may be achieved by aligning the protruded part 112 protruded to the lower part of the battery module frame 100, that is, the lower part of the end plate 110 in the left and right directions only so as to coaxially position the through-hole 111 of the protruded part 112 and the coupling hole 210 of the battery pack frame 200 and then inserting the mounting member 400. Thus, as shown in FIG. 6, it is possible to combine them by only aligning the left and right directions, thereby reducing the assembly tolerance.

That is, FIG. 6 (a) is a view showing an alignment with the battery pack frame 200 in which a conventional protrude shape is formed, and in this case, the alignment in the vertical direction is required as well as the alignment in the left and right directions, thereby increasing the assembly tolerance. Particularly, when the distance between the battery pack frame 200 and the battery module frame 100 increases because the vertical direction is not properly aligned, since the injection of the thermal conductive resin for the formation of the thermal conductive resin layer 300 positioned therebetween is performed in excess of the quantity, there is a problem in that materials such as the thermal conductive resin is wasted.

However, as shown in FIG. 6 (b), according to the present invention it is possible to align the through-hole 111 of the protruded part 112 and the coupling hole 210 of the battery pack frame 200 only by the left-right alignment, so this problem may be prevented. That is, by designing the protruded part 112 to have the same thickness as the thickness of the thermal conductive resin layer 300, there is a gap of as much as the design amount between the battery pack frame 200 and the battery module frame 100 just by aligning the through-hole 111 of the protruded part 112 with the coupling hole 210 of the battery pack frame 200, so that a quantity of the thermal conductive resin may be coated to the corresponding space. Therefore, it is possible to prevent unnecessary waste of the thermal conductive resin for the formation of the thermal conductive resin layer 300.

As above-described, according to an embodiment of the present invention, the weight may be reduced by simplifying the structure of the battery pack frame 200, and when assembling the battery module frame 100 and the battery pack frame 200, the assembly tolerance is reduced, thereby not only simplifying the assembly process and but also preventing the unnecessary waste of materials such as the thermal conductive resin.

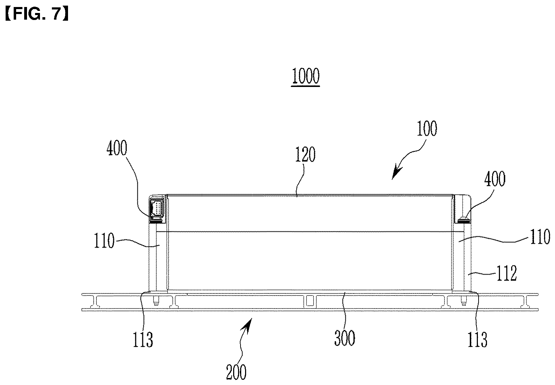

FIG. 7 is a side view of a battery pack according to another embodiment of the present invention.

As shown in FIG. 7, another embodiment of the present invention has the same structure as the previous embodiment except for further forming an insulating member 113 on a lower surface of a protruded part 112 of the battery module frame 100 in contact with the battery pack frame 200.

The insulating member 113 is formed on the lower surface of the protruded part 112 of the battery module frame 100, and may be positioned between the battery module frame 100 and the battery pack frame 200. Through this, heat transfer to the battery pack frame 200 and the battery module frame 100 connected thereto may be blocked.

When both the battery pack frame 200 and the battery module frame 100 are made of metal, conventionally, heat transfer occurs between the battery module frame 100 and the battery pack frame 200, and heat transfer occurs between the battery pack frame 200 and the battery module frame 100, which are influenced by the outside and have a temperature gradient, thereby a plurality of battery cells accommodated in the battery module frame 200 could be directly affected by the temperature of the battery pack frame 200 . However, as shown in FIG. 7, as the insulating member 113 is formed between the battery module frame 100 and the battery pack frame 200, it can prevent the heat transfer due to the metal contact in advance and minimize the effect of an external temperature on the battery cell.

The battery pack may have a structure in which a battery management system (BMS) that manages a temperature or voltage of the battery and a cooling device are added and packed.

The aforementioned battery pack may be applied to various devices. The device may be applied to a vehicle such as an electric bicycle, an electric vehicle, or a hybrid vehicle, but the present invention is not limited thereto, and may be applied to various devices that can use a battery module, and this is also included in the scope of the present invention.

Although specific embodiments have been described and illustrated above, the present invention is not limited to the embodiments described herein, and it would be apparent to those skilled in the art that various changes and modifications might be made to these embodiments without departing from the spirit and the scope of the invention, and modified examples should not be individually understood from the technical spirit or the viewpoint of the present invention.

### [Description of symbols]

100: battery module frame
110: end plate
120: module frame
111: through-hole
112: protruded part
200: battery pack frame
210: coupling hole
300: thermal conductive resin layer
400: mounting member

## Claims

1. A battery pack comprising:
a battery module frame accommodating a battery cell laminated body; and
a battery pack frame to which the battery module frame is mounted,
wherein the battery module frame includes a protruded part having a shape protruded from the lower part of the battery module frame toward the battery pack frame and combined with the battery pack frame, and
one side of the battery pack frame facing the battery module frame is formed flat.

2. The battery pack of claim 1, wherein
the battery pack frame includes a coupling hole in a position corresponding to the protruded part.

3. The battery pack of claim 2, wherein
the protruded part and the coupling hole are coupled to each other via a mounting member.

4. The battery pack of claim 3, wherein
the battery module frame includes an end plate that covers the front and rear surfaces of the battery cell laminated body, and the protruded part is protruded from the bottom of the end plate.

5. The battery pack of claim 4, wherein
a through-hole formed through the protruded part at both ends of the end plate is included, and
the mounting member is inserted through the through-hole and the coupling hole to be coupled.

6. The battery pack of claim 1, further comprising
a thermal conductive resin layer positioned between the battery module frame and the battery pack frame.

7. The battery pack of claim 6, wherein
the thickness of the thermal conductive resin layer is the same as the thickness of the protruded part protruded from the bottom of the battery module frame.

8. The battery pack of claim 1, wherein
the battery module frame further includes an insulating member attached to the end of the protruded part.

9. A battery module comprising
a battery cell laminated body, and
a battery module frame accommodating the battery cell laminated body,
wherein the battery module frame includes:
a module frame covering fours surfaces of the battery cell laminated body and including an opening exposing the end of both sides in the length direction of the battery cell laminated body, and
an end plate coupled to the opening of both sides of the module frame, and
the end plate includes a protruded part protruded under the end plate.

10. The battery module of claim 9, wherein
the end plate includes a through-hole formed through the protruded part on both sides.

11. A device comprising
a battery pack of claim 1.
